# EUROPEAN PATENT APPLICATION

(11) **EP 1 738 654 A1**
(43) Date of publication of application: **03.01.2007**
(21) Application number: 05719649.5
(22) Date of filing: 28.02.2005
(51) Int. Cl.: A23J 3/16, A23G 1/00, A23L 1/06, C12G 1/00, C12G 3/04

(54) **SOYBEAN PROTEIN-CONTAINING SOLUTION AND GEL**

(30) Priority: 26.02.2004 JP 2004051655
(71) Applicant: Fuji Oil Company, Ltd., Osaka-shi, Osaka 542-0086 (JP)
(72) Inventor: KIRIYAMA, Toshio, c/o Fuji Oil Company, Limited, Izumisano-shi Osaka 5988540 (JP); IWAOKA, Eiji, c/o Fuji Oil Company, Limited, Izumisano-shi, Osaka 5988540 (JP); SAITO, Tsutomu, c/o Fuji Oil Company, Limited, Izumisano-shi Osaka 59988540 (JP); ISHIMOTO, Kyoko, c/o Fuji Oil Company, Limited, Izumisano-shi Osaka 5988540 (JP)
(74) Representative: Hayes, Adrian Chetwynd
(86) International application number: PCT/JP2005/003332
(87) International publication number: WO 2005/082156

(57) **Abstract**

It is intended to provide an acidic polar solvent containing protein which contains dissolved soybean protein at a high concentration and shows a high stability over a long time without adding a stabilizer or decomposing the protein. It is also intended to provide a protein-containing food of the gel type such as an alcoholic drink or an alcoholic jelly. A polar solvent in the state of a solution or a gel, in which soybean protein is not dispersed by adding a stabilizer or the like but stably dissolved, can be provided by employing acid-soluble soybean protein in a polar solvent in the state of being dissolved therein.

## Description

### Technical Field

The present invention relates to a solution or gel containing acid-soluble soybean protein in the state of being dissolved in a polar solvent, or its dried material.

### Background Art

Recently, beers and low malt beers containing reduced amounts of carbohydrates and purine bodies or with reduced calories are commercially available, and these products comply with a desire of consumers that an adverse influence on health by alcohol intake would be suppressed to a minimum level. It is said that protein promotes regeneration of liver cells and enhances the activity of an alcohol metabolic enzyme, thereby recommending the intake of accompanying dishes of high protein together in drinking to avoid being sick from drinking. As sources of protein supply, there are those of animal origin such as meats and dairy products and those of plant origin. Soybean protein as typical plant protein is a protein source of such high quality that it is called as "meat in field", and has also an effect of lowering blood cholesterol.

From such nutrition and health standpoint, alcoholic drinks containing protein are studied, and specifically, disclosed in Patent Documents 1 to 3. Patent Document 1 (JP 55-34034 A) discloses the production of an alcoholic drink of milk, and Patent Document 2 (JP 61-177976 A) and Patent Document 3 (JP 61-70970 A) disclose the production of alcoholic drinks containing milk protein. However, these products utilize milk protein of animal origin and all of them are clouded and nave no transparent appearance. Further, since a protease is reacted with protein in these production processes, there is another defect that bitterness tends to be generated.

On the other hand, an alcoholic drink utilizing a soybean protein is disclosed in Patent Documents 4 to 6. Patent Document 4 (JP 62-15507 A) discloses the production of an alcoholic drink of fermented soybean milk, and Patent Documents 5 (JP 62-47178 A) discloses the production of an alcoholic drink containing soybean milk. These require the decomposition with a protease for increasing solubility of protein, which results in complicated processes and, in addition, generation of bitterness. Even when the production is performed without decomposition, a stabilizer is essential for suppressing precipitation of protein under acidic conditions, thereby giving a heavy feel upon drinking with a less refreshing feel. Further, only products of low protein concentration and low alcohol concentration are obtained. Patent Document 6 (JP 2000-139442 A) discloses an alcoholic drink containing acidic soybean milk which is stable even at relatively high alcohol concentration by using water-soluble hemicellulose as a stabilizer. However, a heavy feel upon drinking is caused due to the use of a stabilizer. Thus, these alcoholic drinks containing soybean milk are clouded and have no transparent appearance, or have an unpleasant feel upon drinking with a less refreshing feel due to the use of a stabilizer.

All of these conventional technologies do not improve solubility of protein itself in a polar solvent. Therefore, the products are clouded and are far from alcohol drinks having a refreshing feel or a refreshing feel and transparency. Additionally, these products have such a problem that stability over a long period of time is inferior, even if a stabilizer is used, and the concentration of usable protein, pH, alcohol content, etc. are restricted.

Patent Document 7 (JP 11-308969 A) discloses that a secondary structure of soybean protein changes by treating the protein in an acidic polar solvent to exhibit novel functions such as thermal reversibility and the like. However, this is limited to a laboratorial method such as a method in which 75 soybean protein is prepared from soybean protein isolate as soybean protein, and its β-subunit is selected as a raw material. In addition, the amount of an acid used is too large for foods, which causes a too strong sour taste, thereby deteriorating a flavor.

As described above, protein-containing alcoholic drinks, alcoholic foods, or the like having transparent appearance, good storage stability over a long period of time even without a stabilizer as well as a refreshing feel upon drinking and a pleasant feel are not yet obtained.

Incidentally, seed storage protein is roughly classified for a long time into four kinds of protein of glutelin, globulin, prolamin and albumin based on its solubility. According to this classification method, soybean protein, particularly, main storage soybean protein belongs to globulin which is dissolved in a saline solution. In this classification, protein which is dissolved in water-soluble alcohol is called prolamin, and protein belonging to this class typically includes that contained in wheat such as gliadin, zein, hordein, and the like. As with natural resins such as shellac, rosin, copal, dammar, Daemonorhops draco and the like, by dissolving in alcohol, these prolamin can be used as a raw material of an ethanol-soluble edible vehicle layer, as a raw material for coating such as varnish and the like, or as a molding material (for example, Non-Patent Document 1). However, there is a problem that they become cloudy in an aqueous solution of low alcohol concentration. In addition, their use is restricted because they have a strong cereal smell, and require high protein concentration in order to prepare a solution having viscosity due to relatively low molecular weight of prolamin as protein.
Patent Document 1: JP 55-34034 A
Patent Document 2: JP 61-177976 A
Patent Document 3: JP 61-70970 A
Patent Document 4: JP 62-155076 A
Patent Document 5: JP 61-47178 A
Patent Document 6: JP 2000-139442 A
Patent Document 7: JP 11-308969 A
Non-Patent Document 1: JP 6-35165 U

### Disclosure of the Invention

### Problem to be solved by the Invention

An object of the present invention is to obtain a solution or gel of soybean protein in a polar solvent such as alcohol in which the soybean protein is contained in a dissolution state. Another object of the present invention is to provide a solution or gel of soybean protein in a polar solvent which can exhibit a transparent appearance without becoming cloudy in the co-existence of a polar solvent such as alcohol and the like, and to obtain alcoholic food and drink having excellent feeling upon drinking, little bitterness and a refreshing feel without requiring a stabilizer. Still another object of the present invention is to provide a gel having thermal reversibility or heat setting properties as desired. Still another object of the present invention is to apply soybean protein which is originally belonging to globulin to the same field as that of prolamin which is originally dissolved in a polar solvent, for example, coating or molding materials. Other effects and objects of the present invention such as a flavor is superior to that obtained by using prolamin; a wider range of protein concentration or polar solvent concentration can be employed (little restriction on usable protein concentration, pH, alcohol content and the like); a material having smaller thickness and excellent flexibility can be obtained easily as compared with conventional technologies; and a product obtained by drying and removing alcohol also has excellent storability; will be apparent to those skilled in the art from the following description.

### Means for solving the Problem

For achieving the above objects, the present inventors have found that a solution or gel in which soybean protein is not in a dispersion state by means of addition of a stabilizer and the like, but in a dissolution state in a polar solvent can be obtained by using acid-soluble soybean protein. That is, the present invention provides:
1. A solution or gel which comprises acid-soluble soybean protein in the state of dissolution in a polar solvent;
2. The solution or gel according to the above 1, wherein pH is 2.5 to 4.8;
3. The solution or gel according to the above 1, wherein the content of the acid-soluble soybean protein is 0.5 to 20 % by weight;
4. The solution or gel according to the above 1 which is food and drink or a material for coating or molding;
5. A dried material of the solution or gel according to the above 1;
6. The dried material according to the above 5 which is a coated or molded product; and
7. A process for producing an acid-soluble soybean protein-containing solution or gel, which comprises preparing an aqueous solution of acid-soluble soybean protein and mixing the solution with a polar solvent.

### Effect of the Invention

The present invention provides a solution or gel capable of containing soybean protein in the state of dissolution at a wider concentration range in a polar solvent. When the polar solvent is edible alcohol, alcoholic drinks and foods in the state of gel such as alcohol jelly can also be provided. Further, the present invention can provide an acidic solution, gel or its dried product containing protein and having high stability over a long period of time without addition of an stabilizer or without protein decomposition. Secondarily, food and drink having a refreshing feel upon drinking and a pleasant feel can be prepared without addition of a stabilizer. Further, although the preparation of a polar solvent containing soybean protein and being stable in a weak acidic region has not been possible heretofore in the prior art, according to the present invention, such a solvent can be prepared, and can be applied to industrial products such as cosmetics, plastics and the like. Further, since high concentration alcohol and protein can be carried in the form of a gel, they are advantageous for out door lives such as climbing and the like.

### Best Mode for Performing the Invention

In the present invention, as the acid-soluble soybean protein, it is preferred to use the protein having a solubility (described hereinafter) in an acidic pH range of 55% or more, preferably 60% or more, more preferably 65% or more, further preferably 80% or more. While protein generally tends to decrease its solubility as approaching to its isoelectric point within the acidic side relative to the isoelectric point, the protein which can be suitably used has the above-mentioned solubility even in the acidic range close to isoelectric point such as pH 4.0. Alternatively, the protein which can be suitably used has such properties that soybean protein is soluble in any of aqueous 0.01 to 1% citric acid solutions by addition thereof to the solution at concentration of 1% in terms of the weight of protein.
* Solubility: An aqueous solution of 1 % by weight of a sample was adjusted to pH of measurement, and the total protein amount in the aqueous solution, and the protein amount in the supernatant after centrifugation at 8000 G for 5 minutes were measured by a Kjeldahl method. The proportion of the protein amount in the supernatant to the total protein amount in the aqueous solution was calculated to determine the solubility.

A production process of the acid-soluble soybean protein is not particularly limited as far as the protein having the above-mentioned property can be obtained. For example, a solution containing soybean protein can be heated at a temperature over 100°C in an acidic range relative to pH of the isoelectric point of the protein to obtain acid-soluble soybean protein having a solubility at pH of 4.0 or less of 60% or more. The production process disclosed in WO 2002/67690 can be suitably used in the present invention. Particularly, it is recommended that a solution containing soybean protein is subjected to treatment for increasing positive surface electric charge of soybean protein particles in an acidic range, namely, more specifically, (A) treatment for removing or inactivating a polyanion substance such as phytic acid derived from a raw material protein in the solution, for example, treatment for decomposing phytic acid in soybeans with a phytase and the like, (B) treatment for adding a polycation substance such as chitosan in the solution, or both treatment (A) and (B). By such a treatment, the solubility of soybean protein under acidic conditions can be enhanced, coagulation under acidic conditions can be prevented, and precipitation during storage can also be suppressed. After performing this positive surface electric charge increasing treatment, more preferably, the protein solution is heated at a temperature over 100°C in an acidic range relative to pH of the isoelectric point of the protein, thereby obtaining acid-soluble soybean protein having a higher solubility and higher transparency under acidic conditions with less precipitation during storage. Consequently, it can be used as a raw material which is excellent in solubility in an acidic polar solvent.

Herein, as the soybean protein as a raw material of the acid-soluble soybean protein, there are soybean milk (including both whole milk and defatted milk, hereinafter the same), curd material obtained by precipitating soybean milk under acidic conditions, soybean protein isolate, soybean powder, soybean ground material and the like. They can be appropriately selected and used with addition of water if necessary. In view of transparency of the solution or gel, defatted raw materials are more preferable.

As the polar solvent in the present invention, any solvents may be used as far as they are miscible with water. Examples of the solvent to be used include alcohol such as methanol, ethanol, 1-propanol, 2-propanol, butanol and the like, edible alcohols such as beer, sake, spirit, wine, distilled spirit and the like, and non-alcoholic polar solvents such as acetone, acetonitrile and the like. In case of using for food, ethanol and the above-mentioned edible alcohol is preferred in view of a flavor, food hygiene and safety, and the like.

The concentration range of the polar solvent in which protein can be stably dissolved somewhat varies depending on the hydrophilicity of the polar solvent and cannot be defined uniformly. However, the solvent is generally used in the concentration range of 1 to 90% by weight. Then, usually, the solvent is used as a water-containing polar solvent. When the concentration of the polar solvent in a water-containing solution is less than 1%, the advantages of the present invention disappears. When the concentration of the polar solvent is too high, protein coagulates and precipitates. This is undesirable. In case of a solvent having relatively nigh hydrophilicity such as ethanol, the solvent can be generally used in such concentration as the above-mentioned wide range depending on the protein concentration. In case of ethanol, for example, water-containing ethanol having a concentration of 1 to 90% can be used, and this range is preferred since transparency is maintained and protein hardly causes coagulation and precipitation. On the other hand, in case of a solvent having low hydrophilicity such as butanol, water-containing butanol having a concentration generally of 1 to 30% by weight can be used.

While commercially available beer, sake, spirit, wine, distilled spirit and the like contain trace components such as polyphenol, salts, tannin and the like in addition to alcohol, they react with acid-soluble soybean protein to promote gelling of the polar solvent. However, the edible alcohol can also be used without dilution by adjusting protein concentration, pH and the like. Further, the form of the product can be controlled from a solution to a gel.

The concentration of acid-soluble soybean protein in the polar solvent solution or gel is optimized within a range of 0.1 to 30% by weight according to the kind of the polar solvent, its concentration, pH, and further, intended form. Usually, when the concentration is in a range of 0.5 to 20% by weight, more preferably 1 to 15% by weight, the increase in viscosity during the preparation of the polar solvent solution or gel is suppressed to give good workability, and the object of inclusion of soybean protein of the present invention is achieved. Soybean protein has higher molecular weight in general as compared with prolamin, therefore, the same viscosity as in the case of 10 to 20% prolamin is obtained even at smaller concentration, namely, at several % or less in a solution. Then, for example, the solution or gel can be used as a viscosity controlling agent of an edible vehicle layer to easily keep dispersion of hydrophilic fine powder, and is suitable for coating and film formation in small thickness without voids.

The pH of the polar solvent in the present invention is, for example, in a range of pH 2.0 to 4.8, preferably pH 2.5 to 4.5, more preferably pH 2.5 to 4.3 in case of food use, thereby easily controlling pH without too strong stimulation of an acid. However, in case of non-food use, the pH range is not limited thereto. Further, the acid used for pH control is not particularly limited, and examples thereof include mineral acids such as hydrochloric acid, phosphoric acid, sulfuric acid and the like, and various organic acids such as citric acid, malic acid, tartaric acid, lactic acid and the like., and in case of food use, phosphoric acid and organic acids are preferred.

The production process of the solution or gel of the polar solvent containing acid-soluble soybean protein of the present invention is not particularly limited as far as acid-soluble soybean protein can be finally made into a dissolution state. For example, the polar solvent and acid-soluble soybean protein in the form of powder can be directly mixed (when pH of the polar solvent is previously adjusted to be acidic, protein is easily dissolved and workability is improved), or the polar solvent can also be mixed with an acidic aqueous solution of soybean protein previously prepared. However, when the concentration of the polar solvent in an aqueous solution is high, sometimes, even acid-soluble soybean protein cannot be easily dissolved. In this case, it is generally preferred that an aqueous solution of soybean protein is prepared previously and mixed with the polar solvent of high concentration. Here, the kind of the aqueous solution is not particularly limited as far as protein has been dissolved therein, and the aqueous solution may be that prepared by using simple water or water previously adjusted to be acidic, or using fruit juice, vegetable juice and the like.

The solution or gel of the polar solvent containing acid-soluble soybean protein of the present invention can be used for various films and coatings utilizing film forming properties of protein in addition to applications such as alcohol drink and alcohol jelly. That is, the solution or gel is not limited to foods and drinks but can be used as a material for coating or molding.

Here, the solution or gel of the polar solvent containing acid-soluble soybean protein of the present invention has such merits that spreadability upon applying is excellent, drying time after application can be shortened, and the like as compared with the case of an aqueous solution simply prepared by dissolving acid-soluble soybean protein in water, in addition to such a merit that the solution or gel per se is excellent in storability as a material since the concentration of the polar solvent is not lower than a certain level (in case of ethanol, the concentration is preferably 10% or more). In contrast, by controlling the concentration of the polar solvent to a level lower than a certain level, safety in a production site can be enhance (for example, when the ethanol concentration is lower than 60%, severity in handling as a dangerous material according to Fire Defense Law is relaxed). Even at such lower ethanol concentration, acid-soluble soybean protein can be kept in a dissolution state. In addition, since protein can be kept in a dissolution state at lower alcohol concentration, there is such a merit that alcohol drink can be diluted freely with a diluting agent such as fruit juice and the like.

In case of food and drink, the polar solvent solution can contain any food materials such as fats and oils, various vitamins, minerals, flavors, coloring matters, further, carbon dioxide gas and the like according to the desired object in addition to the above-mentioned acid-soluble soybean protein and the polar solvent. Salts and saccharides selected from water-soluble polysaccharides, basic salts, basic monosaccharides and basic oligosaccharides can be contained for preventing astringency which may be derived from acid-soluble soybean protein upon eating. Examples of the water-soluble polysaccharides include water-soluble soybean polysaccharides, gum arabic, tragacanth gum, locust bean gum, guar gum, glucomannan, thyrium seed gum, tamarind seed gum, taragum, alginic acid, carageenan, agar, farserlan, pectin, curdlan, xanthan gum, jelan gum, pullulan, polydextrose, slightly-digestive dextrin, guar gum decomposed product, thyrium seed coat, low molecular weight sodium alginate, inulin or, modified starches used in food which are modified, for example, by esterification, enzymatic denaturing, oxidation and acid treatment, alphatization and the like. As these water-soluble polysaccharides, known materials used in foods as a thickening agent, stabilizer, dietary fiber and the like can be used, and any materials such as vegetable origin, animal origin, microorganism origin, chemically modified materials and the like may be used.

When these polar solvents containing acid-soluble soybean proteins are used as materials for coating or molding to produce films, coated articles, plastic-like molded articles, these materials can co-exist with known materials. For example, they can co-exist with raw materials such as plasticizers and wetting agents, fats and oils, saccharides, emulsifiers, coloring matters, seasonings, other proteins and the like which are conventionally known for producing soybean protein films. In addition, they can also co-exist with materials known as vehicle materials such as natural resins, for example, shellac, rosin, copal, dammar and Daemonoropus sp., prolamin such as gliadin, zein, hordein and the like, further, various celluloses, polymerized higher molecular weigh materials, for example, acetylcellulose, methylcellulose, carboxymethylcellulose, polyvinyl acetate and the like. Furthermore, they can co-exist with edible coloring matters, coloring reagents, flavors, seasonings, preservatives and the like to be used together as a vehicle. Coating or molding can be performed by a known method, and usually, via a drying step to obtain a coated article or molded article. Since soybean protein of natural origin is used as a raw material in this coated article or molded article, bio-degradability, edibility and the like can be easily imparted to the resulting films, coated articles and plastic-like molded articles.

When the polar solvent containing acid-soluble soybean protein of the present invention is in the form of the gel, the gel having thermal reversibility can be obtained. That is, when heat is applied to the gel structure in which protein particles form a network by a mutual interaction, its network is decomposed and deformed into a solution or a sol, and when this is cooled, it returns again to a gel. However, the polar solvent of the present invention can achieve high protein concentration by the use of acid-soluble soybean protein, and when the protein concentration is high, protein particles form a strong network by a hydrophobic bond to suppress thermal reversibility in some cases. When the protein concentration increases, thermal reversibility is suppressed to give a gel having heat resistance, depending on pH, concentration of the polar solvent and the like. In general, the gel having a protein concentration of 8% by weight or more show remarkable heat resistance.

Hereinafter, the present invention will be illustrate by Examples, but the scope of the present invention is not limited by them. In Examples, all the percents are by weight unless otherwise stated.

### Production Example

Defatted soybean milk was prepared by adding 35 kg of water to 5 kg of low denatured defatted soybean (nitrogen soluble index (NSI): 91) which was obtained by flaking soybeans under compression and separating and removing oil by extraction with n-hexane as an extraction solvent, adjusting pH to 7 with a diluted sodium hydroxide solution, extracting at room temperature with stirring for 1 hour, and then, separating "okara (soy-pulp)" and insoluble materials by centrifugation at 4000 G. This soybean milk was adjusted to pH 4.5 with phosphoric acid, followed by separation by centrifugation at 2000 G using a continuous centrifugal separator (decanter) to obtain an insoluble fraction (acid precipitated curd) and a soluble fraction (whey). Water was added to the acid precipitated curd so that the solid content thereof was 10% by weight to obtain acid precipitated curd slurry. This was adjusted to pH 4.0 with citric acid, and heated to 40°C. To this solution was added a phytase (manufactured by NOVO) in an amount corresponding to 8 units per the solid content, and the enzymatic treatment was performed for 30 minutes (phytic acid content 0.04% by weight/solid component, TCA solubility showed substantially no change). After the reaction, pH was adjusted to 3.5, and the solution was heated at 120°C for 7 seconds by a continuous direct heat sterilizer. This was spray-dried to obtain 1.5 kg of an acid-soluble soybean protein powder. This protein had solubility at pH 4.0 of 90%. Further, the protein had such properties that soybean protein was soluble in any of aqueous 0.01 to 1% citric acid solutions by addition thereof to the solution at concentration of 1% in terms of the weight of protein.

### Comparative Production Example

Defatted soybean milk was prepared by adding 35 kg of water to 5 kg of low denatured defatted soybean (nitrogen soluble index (NSI): 91) which was obtained by flaking soybeans under compression and separating and removing oil by extraction with n-hexane as an extraction solvent, adjusting pH to 7 with a diluted sodium hydroxide solution, extracting at room temperature with stirring for 1 hour, and then, separating "okara" and insoluble materials by centrifugation at 4000 G. This soybean milk was adjusted to pH 4.5 with phosphoric acid, followed by separation by centrifugation at 2000 G using a continuous centrifugal separator (decanter) to obtain an insoluble fraction (acid precipitated curd) and a soluble fraction (whey). Water was added to the acid precipitated curd so that the solid content thereof was 10% by weight to obtain acid precipitated curd slurry. This was dispersed in water again, followed by adjusting pH to 7.0 and heating at 120°C for 7 seconds by a continuous direct heat sterilizer. This was spray-dried to obtain 1.5 kg of soybean protein isolate. This protein had solubility at pH 4.0 of 5%. Further, coagulation occurred when this protein was added to about 0.1% aqueous citric acid solution in terms of 1% protein.

### Example 1

The acid-soluble soybean protein produced in Production Example was mixed with aqueous ethanol solutions having different ethanol concentration at protein concentration of 2% at various pH. The results are shown in Table 1. As shown in the table, protein-containing alcohol having transparency with no recognizable coagulation at an alcohol concentration range as wide as 20 to 90% by weight could be prepared at pH of 4.5 or less. Further, depending on conditions of pH and alcohol concentration, protein-containing alcohol in the state of a solution or a gel could be obtained. The symbols in the table: ○: dissolving, •: gelling, ×: insoluble (hereinafter the same)

**Table 1**

| PH | Ethanol (wt%) | | | | | |
|---|---|---|---|---|---|---|
| | 20 | 40 | 60 | 70 | 80 | 90 |
| 2.5 | ○ | ○ | ○ | ○ | ○ | ○ |
| 3.0 | ○ | ○ | ○ | ○ | ○ | ● |
| 3.5 | ○ | ○ | ○ | ○ | × | × |
| 4.0 | ○ | ● | × | × | × | × |
| 4.5 | ● | × | × | × | × | × |
| 5.0 | × | × | × | × | × | × |

### Example 2

The acid-soluble soybean protein produced in Production Example was mixed with various aqueous ethanol solutions having various protein concentrations at a pH of 3.2. The results are shown in Table 2. As shown in the table, protein-containing alcohol with no recognizable coagulation at protein concentration of 2 to 14% by weight and at an alcohol concentration range as wide as 10 to 60% by weight could be prepared. Depending on conditions of pH and alcohol concentration, protein-containing alcohol in the state of a solution or a gel could be obtained.

**Table 2**

| Protein (wt%) | Ethanol (wt%) | | | | | |
|---|---|---|---|---|---|---|
| | 10 | 20 | 40 | 60 | 80 | 90 |
| 1 | ○ | ○ | ○ | ○ | ○ | ○ |
| 2 | ○ | ○ | ○ | ○ | ○ | ● |
| 4 | ○ | ○ | ○ | ● | ● | × |
| 6 | ○ | ○ | ● | ● | × | × |
| 8 | ○ | ○ | ● | × | × | × |
| 10 | ○ | ● | ● | × | × | × |
| 12 | ○ | ● | × | × | × | × |
| 14 | ○ | × | × | × | × | × |

### Example 3

According to the same manner as that in Example 1, protein-containing polar solvents were prepared except that acetone was used in stead of ethanol. The results are shown in Table 3.

**Table 3**

| PH | Acetone (wt%) | | | | | |
|---|---|---|---|---|---|---|
| | 20 | 40 | 50 | 60 | 70 | 80 |
| 2.5 | ○ | ○ | ○ | ○ | ○ | × |
| 3.0 | ○ | ○ | ○ | ● | × | × |
| 3.5 | ○ | ○ | ● | × | × | × |
| 4.0 | ○ | × | × | × | × | × |
| 4.5 | × | × | × | × | × | × |
| 5.0 | × | × | × | × | × | × |

### Comparative Example

According to the same manner as that in Example 1, protein-containing alcohol was prepared except that the soybean protein isolate obtained in Comparative Production Example was used instead of the acid-soluble soybean protein. The results are shown in Table 4. As shown in the table, when conventional soybean protein isolate was used, protein was not dissolved unless pH was considerably lowered and, coagulation occurred even under dissolution conditions in case of acid-soluble soybean protein.

**Table 4**

| PH | Ethanol (wt%) | | | | | |
|---|---|---|---|---|---|---|
| | 20 | 40 | 50 | 60 | 70 | 80 |
| 2.5 | ○ | ○ | ○ | × | × | × |
| 3.0 | ○ | Coagulated lump | × | × | × | × |
| 3.5 | × | × | × | × | × | × |
| 4.0 | × | × | × | × | × | × |

### Example 4

### Soybean protein-containing wine drink

Granulated sugar was added to commercially available white wine at concentration of 20%, and to this was added the acid-soluble soybean protein in Production Example at concentration of 5%. At this stage, pH was 3.1. This was heat-sterilized to obtain a soybean protein-containing wine drink. The resultant soybean protein-containing wine drink had transparency and a refreshing feel upon drinking.

### Example 5

### Soybean protein-containing bourbon jelly

Granulated sugar was added to commercially available bourbon at concentration of 20%, and to this was added the acid-soluble soybean protein in Production Example at concentration of 5%. Further, pH was adjusted to 3.2 with citric acid, and this was heat-sterilized and allowed to cool to obtain a soybean protein-containing bourbon jelly. The resultant soybean protein-containing bourbon jelly was that having transparency and a good mouthfeel and flavor.

### Example 6

### Soybean protein-containing brandy jelly-containing chocolate

Granulated sugar was added to commercially available brandy at concentration of 23%, and to this was added the acid-soluble soybean protein in Production Example at concentration of 9%. Its pH was adjusted to 3.0 with citric acid, and this was heated to obtain a soybean protein-containing brandy jelly. Further, this jelly was coated with melted chocolate to obtain soybean protein-containing brandy jelly-containing chocolate. The resultant chocolate contained a jelly layer of a soft mouthfeel in a hard chocolate layer, and had a good flavor and a novel mouthfeel.

### Example 7

An aqueous polar solvent solution A having protein concentration of 3%, ethanol concentration of 50% and pH 3.5 was prepared from the acid-soluble soybean protein obtained in Production Example. Separately, an aqueous polar solvent solution B having a concentration of zein ("Showa Zein DP") of 3%, an ethanol concentration of 50% and pH of 3.5 was prepared. The aqueous polar solvent solution A and the aqueous polar solvent solution B were mixed at any ratio between 1:9 to 9:1, and protein in both solutions kept a dissolution state and both protein showed compatibility each other.

When aqueous polar solvent solutions having ethanol concentration of 50% and pH 3.5 and containing 1, 2, 3 and 4% of the acid-soluble soybean protein obtained in Production Example were prepared, these solutions had viscosity of 7 mPas, 12 mPas, 65 mPas and 75 mPas, respectively. Separately, when aqueous polar solvent solutions having concentrations of zein ("Showa Zein DP") of 10 and 20%, ethanol concentration of 50% and pH of 3.5 were prepared, these solutions had viscosity of 15 mPas and 53 mPas, respectively. The viscosity of the solution of 3% acid-soluble soybean protein corresponded approximately to the viscosity of 20% zein. Viscosity was measured at ordinary temperature by a viscometer of vibration mode "CVJ-5000" manufactured by A & D.

When the aqueous polar solvent solution having concentration of the acid-soluble soybean protein of 4%, ethanol concentration of 50% and pH of 3.5 was heated up to 70°C, a sol was formed and the viscosity at this temperature was 35 mPa. When this sol was cooled to 5°C, the viscosity became 1000 mPas or more and the sol was gelled.

The aqueous polar solvent solutions having concentration of the acid-soluble soybean protein obtained in Production Example of 3%, ethanol concentration of 50% and pH of 3.5 was applied on 1 cm cube of chocolate by a brush. Application could be performed without voids. The aqueous polar solvent solution having concentration of the acid-soluble soybean protein obtained in Production Example of 1%, ethanol concentration of 87.5% and pH of 3.0 was applied on 1 cm cube of chocolate likewise by a brush. Application could be performed without voids, the product was dried at ordinary temperature in a short period of time and, in this procedure, a film having no voids was formed. Separately, when the aqueous polar solvent solution having concentration of zein ("Showa Zein DP") of 20%, ethanol concentration of 70% and pH of 3.5 was also prepared and applied on the same chocolate, the film was thicker than the one made with the above solution containing acid-soluble soybean protein.

### Example 8

A film A was obtained by mixing 100 parts of the acid-soluble soybean protein obtained in Production Example, 40 parts of glycerin and 560 parts of 20% ethanol with a silent cutter, deaerating the mixture under reduced pressure, casting the mixture on a "Teflon" (registered trademark) sheet, drying the mixture in a drying machine of 110°C, and then releasing a film from the Teflon sheet. According to the same manner as that described above, a film B was produced except that water was used in stead of 20% ethanol. The drying time in preparing the film A was shorter and its flexibility was excellent.

## Claims

1. A solution or gel which comprises acid-soluble soybean protein in the state of dissolution in a polar solvent.

2. The solution or gel according to claim 1, wherein pH is 2.5 to 4.8.

3. The solution or gel according to claim 1, wherein the content of the acid-soluble soybean protein is 0.5 to 20 % by weight.

4. The solution or gel according to claim 1 which is food and drink or a material for coating or molding.

5. A dried material of the solution or gel according to claim 1.

6. The dried material according to claim 5 which is a coated or molded product.

7. A process for producing an acid-soluble soybean protein-containing solution or gel, which comprises preparing an aqueous solution of acid-soluble soybean protein and mixing the solution with a polar solvent.
